# EUROPÄISCHE PATENTSCHRIFT

(11) **EP 2 826 828 B1**
(45) Veröffentlichungstag und Bekanntmachung des Hinweises auf die Patenterteilung: **06.03.2019**
(21) Anmeldenummer: 14176675.8
(22) Anmeldetag: 11.07.2014
(51) Int. Cl.: C09J 5/04, C09J 7/21, C09J 7/35

(54) **Verfahren zum Ummanteln von langgestrecktem Gut wie insbesondere Leitungen oder Kabelsätzen**
Method for sheathing longitudinally extended goods, such as in particular conduits or cable sets
Procédé destiné à l'enrobage de produit allongé, comme notamment des conduites ou des ensemble de câbles

(30) Priorität: 12.07.2013 DE 102013213726
(43) Veröffentlichungstag der Anmeldung: 21.01.2015
(73) Patentinhaber: tesa SE, 22848 Norderstedt (DE)
(72) Erfinder: Prenzel, Alexander, 20259 Hamburg (DE); Siebert, Michael, 22869 Schenefeld (DE)

(56) Entgegenhaltungen:
- WO-A1-02/18509
- DE-A1- 2 115 537
- DE-A1- 3 940 292
- DE-A1-102009 006 935

## Beschreibung

Die Erfindung bezieht sich auf ein Verfahren zum Ummanteln von langgestrecktem Gut wie insbesondere Leitungen oder Kabelsätzen.
Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.
Verbreitet sind Kabelwickelbänder mit Folien- und Textilträger, die in der Regel einseitig mit unterschiedlichen Haftklebemassen beschichtet sind.
Derzeitige mit Klebeband umwickelte Kabelsätze sind zunächst prinzipiell flexibel. Um die einzelnen Stränge des Kabelsatzes in einer bestimmten Form zu halten, so dass sie zum Beispiel im Motorraum um den Motor herumgeführt werden können, ohne den Motor zu berühren, werden üblicherweise nachträglich angebrachte Spritzgussteile verwendet.
Diese Spritzgussteile haben grundsätzlich den Nachteil, dass ein zusätzlicher Material- und auch Montageaufwand anfällt.
Bei Veränderungen der Kabelsatzführung muss für derartige Spritzgussteile eine neue Form erstellt werden, wodurch erhebliche Zusatzkosten auftreten. Das tritt insbesondere bei nachträglichen Änderungen der Kabelsatzführung auf, wie sie im Rahmen der Modellpflege bei moderneren Kraftfahrzeugen regelmäßig auftritt.

Aus dem Fachbuch "Faserverbund-Kunststoffe" von G. W. Ehrenstein, Hanser, 2006, ISBN 3-446-22716-4 ist die Verwendung von Fasern (insbesondere Glasfasern oder Polyesterfasern) in Kombination mit Harzen (insbesondere Epoxidharzen) bekannt, um Faserverbundkunststoffe herzustellen.

In der EP 2 497 805 A1 wird ein Klebeband beschrieben, das zum Ummanteln von langgetrecktem Gut wie Kabelsätzen in einem Automobil Verwendung findet. Das Klebeband besteht aus einem Träger mit einer Oberseite und einer Unterseite, wobei der Träger bezogen auf die Querrichtung eine Breite B_{T} aufweist, und an zumindest einer Längskante des Trägers ein Klebstoffstreifen aus einem reaktiven hitzeaktivierbaren Kleber vorgesehen ist, der eine Breite B_{K} von mindestens 3 mm und von höchstens 50 % der Breite B_{T} aufweist.
Zum Ummanteln wird das langgestreckte Gut in axialer Richtung von dem Klebeband umhüllt. Die reaktive, aushärtende Klebemasse führt zu einem Schlauch mit sehr hoher Verschlussfestigkeit, da es zu einer "Strukturverklebung" kommt, jedoch nicht zu einem steifen, formgebenden Verbund.

2-Komponentenklebesysteme sind bekannt und in der Fachliteratur eingehend beschrieben. In diesen Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise bestehen bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt)und dem zu polymerisierenden Monomer. Nach Durchmischen oder zumindest Kontaktieren der beiden Komponenten und einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation des Monomers findet anschließend bis zu einem Kettenabbruch statt und die Klebemasse härtet aus, wodurch eine dauerhafte Verklebung der zu verklebenden Teile erreicht wird.

Der vorliegenden Erfindung liegt die Aufgabe zugrunde, ein Verfahren zur Verfügung zu stellen, das ein besonders einfaches, preiswertes und schnelles Ummanteln von langgestrecktem Gut wie insbesondere Leitungen oder Kabelsätzen ermöglicht und das zu einem versteiften ummantelten Gut führt.

Gelöst wird diese Aufgabe durch ein Verfahren, wie es im Hauptanspruch niedergelegt ist. Gegenstand der Unteransprüche sind dabei vorteilhafte Weiterbildungen des Verfahrens.

Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Gemäß einer anderen Ausführungsform der Erfindung sind auf den insbesondere textilen Träger Härtermasse und/oder die Reaktionsmasse in zumindest einem in Längsrichtung des Klebebands verlaufenden Streifen aufgebracht. Bevorzugt sind dann Härtermasse und gleichzeitig Reaktionsmasse in jeweils einem Streifen aufgebracht. Weiter vorzugsweise erstreckt sich der Streifen Härtermasse von der einen Längskante des Trägers ausgehend bis zur Trägermitte und der Streifen der Reaktionsmasse von der gegenüberliegenden Kante des Trägers ausgehend bis zur Trägermitte.

Bevorzugt ist die Ausführungsform, in der Härter- und Reaktionsmasse vollflächig auf dem Träger aufgetragen sind.

Weiter vorzugsweise kann zwischen dem Träger und der Reaktionsmasse eine Trennfolie vorhanden sein.

Bevorzugt wird als Trägermaterial ein textiler Träger.
Grundsätzlich dringt jede viskose Masse während der Beschichtung auf einen textilen Träger in den textilen Träger ein, um im Träger verankern zu können. Hierbei werden die einzelnen Fasern oder Garne von der Masse umflossen, so dass die Massenschicht nicht mehr vom Träger zu trennen ist.
Die Verankerung ist üblicherweise so stark, dass ein solches Klebeband problemlos von einer Rolle abgewickelt werden kann, ohne dass die Verankerung der Masse reißt und es zum so genannten Umspulen der Masse kommt (die Masse befindet sich dann auf der Rückseite des Trägers). Des Weiteren wird von den meisten Haftklebebändern erwartet, dass diese vom Untergrund wieder abgelöst werden können, also möglichst spurlos wieder aufgenommen werden können. Das heißt, das Klebeband darf nicht zwischen Träger und Masse adhäsiv brechen.

Im Folgenden werden die Härter- beziehungsweise die Reaktionsmasse zusammen als Massen bezeichnet. Wenn dort steht, die Massen sind in den Träger eingedrungen, so ist damit gemeint, dass nur die Härtermasse oder nur die Reaktionsmasse oder die Härter- und die Reaktionsmasse gleichzeitig in den Träger eingedrungen sind. Letztere Variante ist bevorzugt.

Gemäß einer bevorzugten Ausführungsform der Erfindung sind Massen nach dem Aufbringen auf den Träger zu mehr als 10 %, vorzugsweise zu mehr als 25 % in den Träger eingesunken.
Ein Zahlenwert von beispielsweise 25 % bedeutet dabei, dass die Masse über die eine Schichtdicke von 25 % der Dicke des textilen Trägers eingedrungen ist, also bei einem Träger mit einer Dicke von 100 µm über eine Schichtdicke von 25 µm Masse innerhalb des Trägers, und zwar beginnend von der Fläche des Trägers, auf der die Masse beschichtet ist, und in senkrechter Richtung zu der von der Längs- beziehungsweise Quererrichtung aufgespannten Ebene.

Die Menge an beschichteter Masse wird gemäß einer bevorzugten Ausführungsform so gewählt, dass noch ein Gutteil der teileingesunkenen Masseschicht über den Träger hinausragt.
Vorzugsweise beträgt die Dicke der nichteingesunkenen Massenschicht mehr als 25 µm, weiter vorzugsweise mehr als 50 µm, weiter vorzugsweise mehr als 100 µm.

Der Kontakt von Härter- und Reaktionsmasse nach der Applizierung des Klebebands führt nach dem insbesondere thermisch induzierten Aushärten zu einer Strukturverklebung und damit Versteifung des Trägers, wobei die Position der Trägerfasern oder Fäden zueinander fixiert wird.
Weiter vorzugsweise ist der Träger nach dem Aufbringen der Massen vollständig, also über 100 % der Trägerdicke, mit den Massen getränkt, so dass alle Trägerfasern fixiert werden. Auch bei dieser Variante der Erfindung kann die Menge der aufgebrachten Masse so gewählt werden, dass noch eine Teilschicht der Massen über den Träger hinausragen.

Das Klebeband wird gemäß einer Ausführungsform in einer Schraubenlinie um das langgestreckte Gut geführt. Die Wicklung erfolgt vorzugsweise so, dass die neue Lage Klebeband die darunter befindliche teilweise überlappt, bevorzugt zu 50 %.
Weiter vorzugsweise kann das Klebeband ein zweites Mal um das Gut geführt werden. Bevorzugt erfolgt diese zweite Wicklung ebenfalls in Form einer Schraubenlinie, vorzugsweise mit Versatz. Die Wicklung kann dabei in gleicher Richtung wie die erste Wicklung erfolgen, also ebenfalls von links nach rechts, sie kann aber auch in entgegengesetzter Richtung erfolgen.

Besonders vorteilhaft ist ein Klebeband, bei dem als Träger ein Gewebe, ein Vlies oder ein Gewirke eingesetzt wird.
Klebebänder mit derartigen Trägern lassen sich relativ problemlos von Hand einreißen, was für den beschriebenen Einsatzzweck und die besonders bevorzugte Verarbeitung als Wickelband zur Bündelung von Kabeln in Automobilen ebenfalls von besonderer Bedeutung ist.
Eine Reißfestigkeit in Querrichtung von weniger als 10 N, welche nach der AFERA-Norm 4007 bestimmt wird, dient als Kriterium für die Handeinreißbarkeit des Klebebandes.

Lediglich bei sehr hohen Flächengewichten oder Dicken der eingesetzten Träger kann die Handeinreißbarkeit nicht oder nur eingeschränkt gegeben sein. In diesem Fall können aber Perforationen vorhanden sein, um die Handeinreißbarkeit zu optimieren.

Als Träger können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar. Ein Malivlies ist dadurch gekennzeichnet, dass ein Querfaservlies durch die Bildung von Maschen aus Fasern des Vlieses verfestigt wird.
Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch der Träger einen sehr geringen Foggingwert.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.
Des Weiteren sind Garne, gefertigt aus den angegebenen Rohstoffen, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder aus Fäden aus natürlichen Rohstoffe bestehen.

Bevorzugt werden als Material für den Träger Polyester oder Glas, besonders bevorzugt Polyester, eingesetzt aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus haben Polyester und Glas die Vorteile, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist.

Vorteilhaft liegt das Flächengewicht des textilen Trägers zwischen 30 g/m² und 300 g/m² weiter vorteilhaft zwischen 50 g/m² und 200 g/m², besonders vorteilhaft zwischen 60 g/m² und 150 g/m², ganz besonders vorteilhaft zwischen 70 g/m² und 100 g/m².

Gemäß einer besonders vorteilhaften Ausführungsform der Erfindung werden als Träger ein Gewebe oder ein Vlies aus Polyester eingesetzt, die ein Flächengewicht zwischen 60 g/m² und 150 g/m² aufweisen.

Schließlich kann das Klebeband ein Abdeckmaterial (Liner) aufweisen, mit dem bis zum Gebrauch die Härtermasse und insbesondere die Reaktionsmasse eingedeckt sind und das vor Gebrauch des Klebebands abgezogen wird. Als Abdeckmaterialien eignen sich auch alle oben ausführlich aufgeführten Materialien.
Bevorzugt wird ein nicht-fusselndes Material eingesetzt wie eine Kunststofffolie oder ein gut verleimtes, langfaseriges Papier.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.
Abhäsive Beschichtungsmassen werden in großem Umfang zur Herstellung von Linern in der Beschichtung insbesondere von flächigen Materialien wie Papieren oder Folien verwendet, um die Adhäsionsneigung von adhärierenden Produkten gegenüber diesen Oberflächen zu verringern.

Ist eine Schwerentflammbarkeit des beschriebenen Klebebands erwünscht, lässt sich diese erzielen, indem dem Träger und/oder den Massen Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden.

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein. Die Lage des Streifens auf dem Träger ist frei wählbar, wobei eine Anordnung direkt an einer der Kanten des Trägers bevorzugt wird.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Weiter vorzugsweise zerstört das Klebeband bei Verklebung auf Kabeln mit PVC-Ummantelung und auf Kabeln mit Polyolefin-Ummantelung dieselbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden. Das erfindungsgemäße Klebeband eignet sich hervorragend für das Umwickeln von Kabeln, lässt sich für eine einfache Verarbeitung leicht abwickeln und zeigt keine Kabelversprödung auch bei den hohen Temperaturklassen T3 und T4 über 3000 h.

Gemäß einer bevorzugten Ausführungsform der Erfindung kann die Reaktionsmasse vorliegen
- als Klebemasse
- als Nassschicht in Lösung oder als Dispersion
- als in einem Lack eingebettete Masse.

Besonders vorteilhafte Ausführungsformen der Erfindung umfassen folgende Klebebandvarianten:
Gemäß einer weiteren vorteilhaften Ausführungsform sind die Härter- und/oder Reaktionsmasse mit Diffusionsvermittlern ausgerüstet. Diese Vermittler bewirken eine beschleunigte Diffusion oder wirken als Phasentransferreagenz der Base oder des Vernetzers. Typische und vorteilhaft gewählte Typen sind niedermolekulare Substanzen wie Weichmacher, Lösungsmittel und/oder Tenside.

In einer ersten bevorzugten Ausführungsform des Klebebands erfolgt die Aushärtung bei reduzierter Deblockierungstemperatur.
Die Härtermasse besteht aus einer acrylsäurearmen, bevorzugt acrylsäurefreien Acrylatklebemasse. Eine typische acrylsäurefreie Acrylatklebemasse basiert auf den Monomeren Dihydroxy-ethylacrylat, n-Butylacrylat und/oder 2-Ethylhexylacrylat. Sie enthält keine Acrylsäure. Die Acrylatklebemasse kann insbesondere mit Isocyanaten vernetzt sein. Die Härtermasse ist mit einem Vernetzer modifiziert. Bei dem Vernetzer handelt es sich um blockierte Isocyanate wie Carbonate, Urethane, Harnstoffderivate, Isocyanate blockiert mit Lactamen oder Lactonen und malonsäureesterblockierte Isocyanate. Vorzugsweise beträgt der Anteil der blockierten Isocyanate 0,5 Gew.-% bis 1 Gew.-%. Beispielhaft sei Dyhard 500 (Alzchem) mit einer Deblockierungstemperatur von ca. 100 °C genannt. Dyhard 500 ist N,N"-(4-Methyl-m-phenylen)bis[N',N'-dimethylharnstoff].
Der Kontakt der Reaktionsmasse mit der Härtermasse führt bei Verwendung von Dyhard 500 zu einer Reduzierung der Deblockierungstemperatur des Härters um ca. 40 °C.

Die Reaktionsmasse ist mit einer oder mehreren nicht-nukleophilen Basen modifiziert, beispielhaft seien 1,8-Diazabicyclo[5.4.0]undec-7-en (DBU), 1,4-Diazabicyclo[2.2.2]octan (DABCO) und 1,5-Diazabicyclo[4.3.0]non-5-en (DBN) genannt.
Die Reaktionsmasse kann dabei in unterschiedlichen Varianten verwirklicht sein.
- In der ersten Variante bildet eine acrylsäurearme, bevorzugt acrylsäurefreie Klebemasse mit 1 Gew.-% bis 2 Gew.-% der Basen die Reaktionsmasse. Die Acrylatklebemassen der Härtermasse und der Reaktionsmasse können (abgesehen von den angegebenen Unterschieden) identisch sein.
   Da sowohl die Basen als auch der Vernetzer migrieren können, werden sowohl die Härter- als auch die Reaktionsmasse ausgehärtet.
- In der zweiten Variante liegt die Reaktionsmasse als Nassschicht vor, das heißt die Basen sind aufgelöst in Lösungsmitteln wie Aceton oder Ethylacetat, wobei der Anteil der Basen in der Nassschicht vorzugsweise zwischen 15 und 30 Gew.-%, weiter vorzugsweise zwischen 20 und 25 Gew.-% liegt.
   Die Applikation der Nassschicht erfolgt entweder durch Benetzen des Untergrunds vor Anwendung des Klebebands oder durch Benetzen des durchlässigen textilen Träger des Klebebands. Die Lösemittel treiben hierbei die Migration der Basen in die Härtermasse durch Aufweichen der Härtermasse voran.
- In der dritten Variante liegt die Reaktionsmasse als Lackschicht vor. Bevorzugt ist ein möglichst weicher Lack. Bei einem weichen Lack liegt die Glasübergangstemperatur unterhalb der Gebrauchstemperatur, also in der Regel unter Raumtemperatur oder unter 0 °C. Der Anteil der Basen im Lack liegt vorzugsweise zwischen 15 und 15 Gew.-%, weiter vorzugsweise zwischen 10 und 12 Gew.-%.

In einer zweiten bevorzugten Ausführungsform des Klebebands erfolgt die Aushärtung über eine Säure-Base-Reaktion. Eine thermische Behandlung ist nicht zwingend für die Vernetzungsreaktion notwendig, kann aber verwendet werden, um die Migration und damit die Vernetzung zu beschleunigen.
Der Kontakt der Härtermasse mit der Reaktionsmasse führt zu einer Säure-Base-Reaktion. In der Reaktionsmasse liegen die Basen beziehungsweise Säuren ungebunden vor, so dass sie die Härtermasse durchdringen können und damit zu einem vollständigen Aushärten der Härtermasse führen.

Bei dieser Ausführungsform (Säure-Base-Mechanismus) sind unterschiedliche Kombinationen möglich.
Die Härtermasse kann eine Säure-Härtermasse sein, vorzugsweise eine acrylsäurereiche Acrylatklebemasse. Der Gehalt an Acrylsäure liegt zwischen 3 und 12 Gew.-%.
Die Reaktionsmasse ist dann eine Base-Reaktionsmasse, vorzugsweise Isophorondiamin, Epikure 925 (Triethylentetraamin), Jeffcat Z130, Jeffcat ZF10. In der Base-Reaktionsmasse erfolgt die Migration eines Moleküls mit mindestens zwei basischen Funktionalitäten pro Molekül.

Im umgekehrten Fall ist die Härtermasse Base-Härtermasse, vorzugsweise eine basische Acrylatklebmasse, bestehend aus einem Copolymer mit 3 Gew.-% N,N-Dimethylaminopropylacrylat, 87 Gew.-% Butylacrylat und 10 Gew.-% Ethylhexylacrylat. Die basische Acrylatklebemasse kann noch bis zu 50 Gew.-%, vorzugsweise bis zu 30 Gew.-% ein Klebharz enthalten, beispielsweise Dertophene T105, ein Terpenphenolharz. Wenn ein Klebharz in der Klebemasse vorhanden ist, reduzieren sich die Anteile von N,N-Dimethylaminopropylacrylat, Butylacrylat und Ethylhexylacrylat entsprechend.
Die Reaktionsmasse ist dann eine Säure-Reaktionsmasse, beispielsweise Maleinsäure, Fumarsäure, Oxalsäure, Zitronensäure. In der Säure-Reaktionsmasse erfolgt die Migration eines Moleküls mit mindestens zwei sauren Funktionalitäten pro Molekül.

Die Reaktionsmasse kann auch in Form der oben geschilderten Nassschicht vorliegen. Die Lösemittel treiben hierbei die Migration der Base in die Härtermasse durch Aufweichen der Härtermasse voran.

Die Reaktionsmasse kann auch in Form der oben geschilderten Lackschicht vorliegen.

In einer dritten bevorzugten Ausführungsform des Klebebands erfolgt die Aushärtung über eine Epoxy-Amin-Reaktion. Eine thermische Behandlung ist nicht zwingend für die Vernetzungsreaktion notwendig, kann aber verwendet werden, um die Migration und damit die Vernetzung zu beschleunigen.

Der Kontakt der Härtermasse mit der Reaktionsmasse führt zu einer Epoxid-Amin-Reaktion. In der Reaktionsmasse liegen die Epoxide beziehungsweise Amine ungebunden vor, so dass sie die Härtermasse durchdringen können und damit zu einem vollständigen Aushärten der Härtermasse führen.

Bei dieser Ausführungsform sind ebenfalls unterschiedliche Kombinationen möglich.
Die Härtermasse kann eine Epoxy-Härtermasse sein, vorzugsweise eine epoxidhaltige Acrylatklebemasse basierend auf n-Butylacrylat und/oder 2-Ethylhexylacrylat, Acrylsäure und Glycidylmethylacrylat (vorzugsweise enthalten zu 1 bis 5 Gew.-%, weiter vorzugsweise zu 2 Gew.-%). Die Reaktionsmasse kann eine aminhaltige Masse sein, vorzugsweise Epikure 925, Isophorondiamin oder 1,6-Hexandiamin.

Im umgekehrten Fall ist die Härtermasse eine Amin-Härtermasse, vorzugsweise eine aminhaltige Acrylatklebmasse, weiter vorzugsweise bestehend aus einem Copolymer mit 3 Gew.-% N,N-Dimethylaminopropylacrylat, 87 Gew.-% Butylacrylat und 10 Gew.-% Ethylhexylacrylat. Die basische Acrylatklebemasse kann noch bis zu 50 Gew.-%, vorzugsweise bis zu 30 Gew.-% ein Klebharz enthalten, beispielsweise Dertophene T105. Wenn ein Klebharz in der Klebemasse vorhanden ist, reduzieren sich die Anteile von N,N-Dimethylaminopropylacrylat, Butylacrylat und Ethylhexylacrylat entsprechend. Die Reaktionsmasse ist dann eine epoxidhaltige Masse, beispielsweise Pentaerythrittetraglycidether (Polypox R16), Polypropylenglykoldiglycidether (Polypox R19), Trimethylolpropantriglycidether (Polypox R20) oder Epikote 828, ein Bisphenol A-Epoxid.

Die Reaktionsmasse kann auch in Form der oben geschilderten Nassschicht vorliegen. Die Lösemittel treiben hierbei die Migration der Base in die Härtermasse durch Aufweichen der Härtermasse voran.

Die Reaktionsmasse kann auch in Form der oben geschilderten Lackschicht vorliegen.

Als Epoxidharze werden üblicherweise sowohl monomere als auch oligomere Verbindungen mit mehr als einer Epoxidgruppe pro Molekül verstanden. Dieses können Reaktionsprodukte von Glycidestern oder Epichlorhydrin mit Bisphenol A oder Bisphenol F oder Mischungen aus diesen beiden sein. Einsetzbar sind ebenfalls Epoxidnovolakharze gewonnen durch Reaktion von Epichlorhydrin mit dem Reaktionsprodukt aus Phenolen und Formaldehyd. Auch monomere Verbindungen mit mehreren Epoxidendgruppen, die als Verdünner für Epoxidharze eingesetzt werden, sind verwendbar. Ebenfalls sind elastisch modifizierte Epoxidharze einsetzbar.
Beispiele von Epoxidharzen sind Araldite® 6010, CY-281, ECN 1273, ECN, 1280, MY 720, RD-2 von Ciba Geigy, DER® 331, 732, 736, DEN 432 von Dow Chemicals, Epon® 812, 825, 826, 828, 830 etc. von Shell Chemicals, HPT® 1071, 1079 ebenfalls von Shell Chemicals, Bakelite® EPR 161, 166, 172, 191, 194 der Bakelite AG .

Kommerzielle aliphatische Epoxidharze sind zum Beispiel Vinylcyclohexandioxide wie ERL-4206, 4221, 4201, 4289 oder 0400 von Union Carbide Corp.

Elastifizierte Epoxidharze sind erhältlich von der Firma Noveon unter dem Namen Hycar.

Monomere Verbindungen mit mehreren Epoxidgruppen sind zum Beispiel Bakelite® EPD KR, EPD Z8, EPD HD, EPD WF, etc. der Bakelite AG oder Polypox® R 9, R12, R 15, R 19, R 20 etc. der Firma UCCP.

**Kommerziell erhältliche, eingesetzte Chemikalien**

| *Chemische Verbindung* | *Handelsname* | *Hersteller* | *CAS*-*Nr.* |
|---|---|---|---|
| Klebharz auf Terpen-Phenolbasis (Erweichungspunkt 105 °C, Hydroxylwert 30-60) | Dertophene® T105 | DRT, Frankreich | 73597-48-5 |
| *N*,*N*,*N*'-Trimethyl-*N*'-hydroxyethyl bisaminoethylether | Jeffcat® ZF-10 | Huntsman | 83016-70-0 |
| *N*'-(3-(Dimethylamino)propyl)-*N*,*N-*dimethyl-1,3-propandiamin | Jeffcat® Z-130 | Huntsman | 6711-48-4 |

| | | | |
|---|---|---|---|
| alle Spezifikationsangaben bei 20 °C; | | | |

Gemäß einer vorteilhaften Ausführungsform der Erfindung sind die oben geschilderten Klebemassen selbstklebend.
Dann können durch das Klebeband Kabel gebündelt werden und/oder das Klebeband kann ohne weitere Hilfsmittel auf dem Kabelsatz durch Spiralwicklung befestigt werden.

Eine Selbstklebemasse, auch Haftklebemasse genannt, ist eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Steifigkeit des Kabelsatzes kann durch eine selbstklebende Klebemasse erhöht werden, weil auch die Klebmasse mit den Kabeln des Kabelsatzes verklebt und so deren Position zueinander und zum umgebenden (bereits steifen) Träger fixiert.

Als zuzusetzende klebrigmachende Harze sind ausnahmslos alle vorbekannten und in der Literatur beschriebenen Klebharze einsetzbar. Bevorzugt geeignet sind unter anderem nicht hydrierte, partiell- oder vollständig hydrierte Harze auf Basis von Inden, Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder ß-Pinen und/oder δ-Limonen oder hydrierte Polymerisate von bevorzugt reinen C₈- und C₉-Aromaten.
Beliebige Kombinationen dieser und weiterer Harze können eingesetzt werden, um die Eigenschaften der resultierenden Masse wunschgemäß einzustellen. Im Allgemeinen lassen sich alle mit dem entsprechenden Polymer kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.

Als weitere Additive können typischerweise genutzt werden:
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Füllstoffe wie zum Beispiel Siliziumdioxid, Glas (gemahlen oder in Form von Kugeln), Aluminiumoxide, Zinkoxide, Calciumcarbonate, Titandioxide, Ruße, Metallpulver, etc.
- Farbpigmente und Farbstoffe sowie optische Aufheller

Durch den Einsatz von Weichmachern kann die Elastizität der vernetzten Masse erhöht werden. Als Weichmacher können dabei zum Beispiel niedermolekulare Polyisoprene, Polybutadiene, Polyisobutylene oder Polyethylenglykole und Polypropylenglykole eingesetzt werden oder Weichmacher auf Basis Polyethylenoxiden, Phosphatestern, aliphatischen Carbonsäureestern und Benzoesäureestern. Weiterhin lassen sich auch aromatische Carbonsäureester, höhermolekulare Diole, Sulfonamide und Adipinsäureester einsetzen.

Weiterhin können optional Füllstoffe (zum Beispiel Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebverstärkende Additive und Thermoplaste, Compoundierungsmittel und/oder Alterungsschutzmittel, zum Beispiel in Form von primären und sekundären Antioxidantien oder in Form von Lichtschutzmitteln zugesetzt sein.

Vorteilhaft liegen die Dicke der aufgebrachten Härter- und/oder Reaktionsmasse zwischen 50 µm und 500 µm, weiter vorteilhaft zwischen 100 µm und 250 µm, besonders vorteilhaft zwischen 100 µm und 200 µm.

In einer Variante des erfindungsgemäßen Verfahrens zum Ummanteln von langgestrecktem Gut wie insbesondere Leitungen oder Kabelsätzen, wird ein Klebebandsystem aus einem ersten Klebeband umfassend einen insbesondere textilen Träger, auf dessen obere Seite eine Härtermasse aufgebracht ist, und einem zweiten Klebeband umfassend einen insbesondere textilen Träger, auf dessen untere Seite eine Reaktionsmasse aufgebracht ist, verwendet.
Das erste und das zweite Klebeband werden in einer Schraubenlinie um das langgestreckte Gut geführt oder umhüllen das langgestreckte Gut in axialer Richtung derart, dass die Härtermasse des ersten Klebebands mit der Reaktionsmasse des zweiten Klebebands in Kontakt tritt.

Das langgestreckte Gut wird mitsamt den umhüllenden Klebebändern in die gewünschte Anordnung, insbesondere in den Kabelsatzplan gebracht, das langgestreckte Gut in dieser Anordnung gehalten.
Da die Härtermasse mit der Reaktionsmasse reagiert, entsteht eine aushärtende Masseschicht.
Eines der Klebebänder wird dabei so gewickelt, dass der Träger mit der nichtbeschichteten Seite in Kontakt mit dem Gut steht, so dass die Härtermasse beziehungsweise die Reaktionsmasse nach außen weisen. Dann erfolgt die Wicklung des anderen Klebebands derart, dass Härtermasse und Reaktionsmasse aufeinander liegen, so dass die nichtbeschichtete Seite des anderen Klebebands nach außen weist. Bevorzugt erfolgt die zweite Wicklung wie die erste Wicklung in Form einer Schraubenlinie, vorzugsweise mit Versatz. Die Wicklung kann dabei in gleicher Richtung wie die erste Wicklung erfolgen, also ebenfalls von links nach rechts, sie kann aber auch in entgegengesetzter Richtung erfolgen.

Eine weitere Variante der Erfindung umfasst eine Ummantelung, die aus einer Eindeckung besteht, bei der in einem Kantenbereich der Eindeckung ein erstes Klebeband vorhanden ist, das so auf der Eindeckung verklebt ist, dass sich das erste Klebeband über eine der Längskanten der Eindeckung erstreckt, und zwar vorzugsweise in einem im Vergleich zur Breite der Eindeckung schmalen Kantenbereich. Das erste Klebeband besteht dabei aus einem vorzugsweise textilen Träger, auf den die Härtermasse oder die Reaktionsmasse aufgebracht ist.
Die Ummantelung weist im Kantenbereich der Eindeckung, und zwar an der gegenüberliegenden Längskante, ein zweites Klebeband auf, das so auf der Eindeckung verklebt ist, dass sich das Klebeband über die andere der beiden Längskanten der Eindeckung erstreckt, und zwar ebenfalls vorzugsweise in einem im Vergleich zur Breite der Eindeckung schmalen Kantenbereich. Das zweite Klebeband besteht dabei ebenfalls aus einem vorzugsweise textilen Träger, auf den, wenn das erste Klebeband die Härtermasse aufweist, die Reaktionsmasse aufgebracht ist, beziehungsweise umgekehrt. Es hat sich auch als hervorragend herausgestellt, wenn das erste Klebeband auf der Oberseite der Eindeckung und das zweite Klebeband auf der Unterseite der Eindeckung angeordnet sind.

Die Eindeckung wird vorzugsweise von einem Textil gebildet, wie sie oben ausführlich beschrieben sind.

Die Breite der Eindeckung wird vorteilhafterweise so gewählt, dass sie mit dem Umfang der zu ummantelten Gutes weitgehend übereinstimmt, um möglichst keine doppelte Lage an Eindeckung über dem Gut zu erhalten.
Wenn ein größerer Schutz des Gutes oder stärkere Dämpfungseigenschaften gewünscht werden, kann die Eindeckung eine sehr viel größere Breite aufweisen, als es dem Umfang des zu ummantelnden Gutes entspricht, um beispielsweise einen zwei- oder dreifachen Umschlag des Gutes zu erzielen.
Das oder die Klebebänder haben bevorzugt Breiten zwischen 10 und 50 mm, vorzugsweise 15 bis 25 mm.
Bevorzugt entspricht die Breite der Eindeckung zumindest der Breite der bedien Klebebänder, weiter vorzugsweise ist die Eindeckung mindestens 1,5-mal so breit wie die beiden Klebebänder, weiter vorzugsweise mindestens zweimal.
Für den Einsatz bei Kabelbäumen, die im Automobilbau Verwendung finden, sind für die Eindeckung Breiten von 80, 105, 135 mm besonders vorteilhaft, können aber je nach Anwendungsfall variabel hergestellt werden; die Länge richtet sich nach der Ausgestaltung des Kabelbaums.

Die Ummantelung ist wiederum vorteilhaft zum Ummanteln von langgestrecktem Gut, wie insbesondere Kabelsätzen, zu verwenden, wobei das langgestreckte Gut in axialer Richtung von der Eindeckung umhüllt wird.
Die Umhüllung des Guts erfolgt für die beidkantig mit Klebeband ausgerüstete Ausführungsform, dass das erste Klebeband in axialer Richtung des Gutes derart auf dem Gut aufgelegt wird, dass die nichtbeschichtete Seite des Klebebands dem Gut zugewandt ist. Dann wird das Gut mit der Eindeckung in einer kreisförmigen Bewegung eingeschlagen. Schließlich wird das zweite Klebeband mit der beschichteten Seite auf die beschichtete Seite des ersten Klebebands verpresst, so dass die Härtermasse und die Reaktionsmasse in Kontakt kommen und aushärten.

Eine derartige Ummantelung sowie optimierte Ausführungsformen desselben werden in der EP 1 312 097 A1 offenbart. In der EP 1 300 452 A2, der DE 102 29 527 A1, der WO 2006/108871 A1, der EP 1 367 608 A2, der EP 1 315 781 A1 sowie der DE 103 29 994 A1 werden Varianten oder Weiterentwicklungen beschrieben.

Im Folgenden soll das Klebeband anhand mehrerer Figuren beispielhaft näher erläutert werden, ohne die Erfindung auf diese Ausführungsformen zu beschränken.

Es zeigen:
- Figur 1: das Klebeband gemäß einer ersten vorteilhaften Ausführungsform im seitlichen Schnitt,
- Figur 2: das Klebeband gemäß einer zweiten vorteilhaften Ausführungsform im seitlichen Schnitt,
- Figur 3: eine Variante der Erfindung, bei dem zwei Klebebänder Verwendung finden, und
- Figur 4: eine Variante der Erfindung, bei dem zwei Klebebänder und eine Eindeckung Verwendung finden, und
- Figur 5: einen Ausschnitt eines Kabelbaums, der sich aus einer Bündelung von einzelnen Kabeln zusammensetzt und der mit dem erfindungsgemäßen Klebeband ummantelt ist.

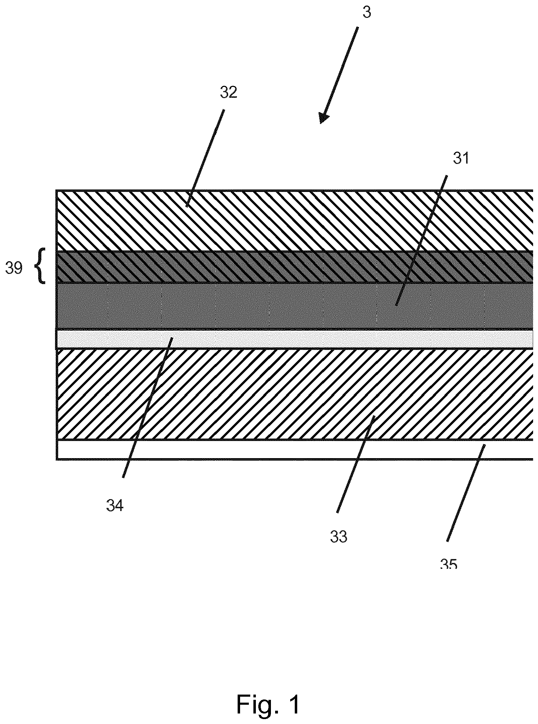

In der Figur 1 ist im Schnitt in Querrichtung (Querschnitt) das Klebeband 3 gezeigt, das aus einem Vliesträger 31 besteht, auf dessen obere Seite eine Härtermasse 32 und auf dessen untere Seite eine Reaktionsmasse 33 aufgebracht ist.
Die Härtermasse 32 ist zu 25 % in den Träger 31 eingesunken, was eine optimale Verankerung bewirkt (39).
Zwischen Träger 31 und Reaktionsmasse 33 ist eine Trennfolie 34 vorhanden.
Des Weiteren ist Reaktionsmasse 33 auf der freien Seite mit einem Liner 35 eingedeckt. Sowohl Härtermasse 32 als auch Reaktionsmasse 33 sind über die gesamte Breite des Trägers 31, also vollflächig aufgebracht.

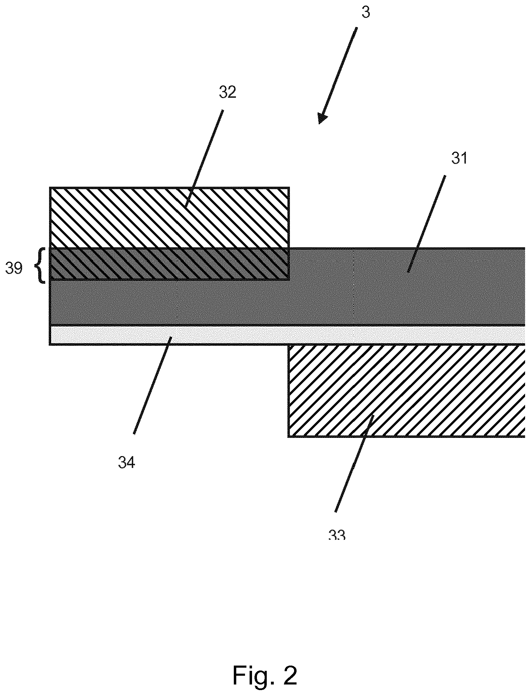

In der Figur 2 ist im Schnitt in Querrichtung (Querschnitt) eine andere Variante des Klebebands 3 gezeigt, das aus einem Vliesträger 31 besteht, auf dessen obere Seite eine Härtermasse 32 und auf dessen untere Seite eine Reaktionsmasse 33 aufgebracht ist.
Die Härtermasse 32 ist zu 25 % in den Träger 31 eingesunken, was eine optimale Verankerung bewirkt (39).

Zwischen Träger 31 und Reaktionsmasse 33 ist eine Trennfolie 34 vorhanden. Die Trennfolie erstreckt sich über die gesamte Breite des Trägers 31.
Sowohl Härtermasse 32 als auch Reaktionsmasse 33 sind in Form eines Streifens aufgebracht. Der Streifen Härtermasse 31 erstreckt sich von der einen Längskante des Trägers 31 ausgehend bis zur Mitte des Trägers 31. Der Streifen der Reaktionsmasse 33 erstreckt sich von der gegenüberliegenden Kante des Trägers 31 ausgehend bis zur Mitte des Trägers 31.

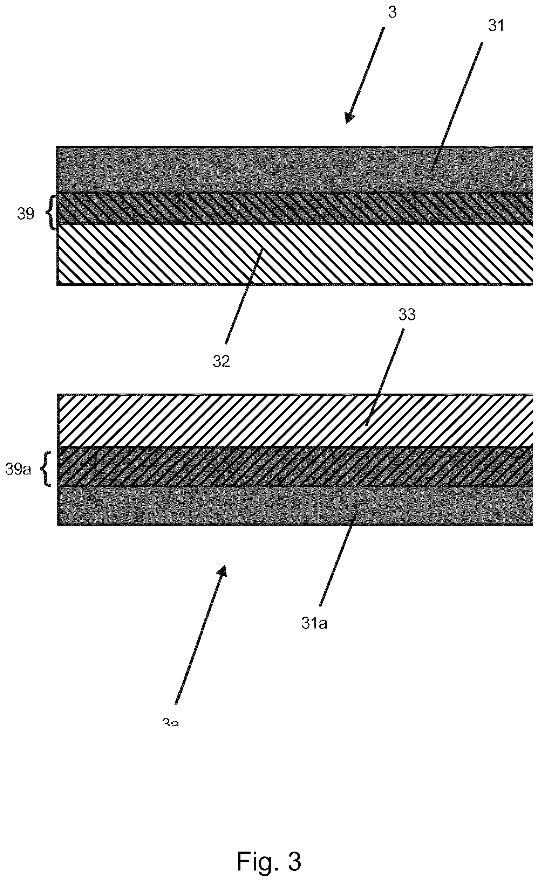

In der Figur 3 ist eine Alternative des erfindungsgemäßen Verfahrens zum Ummanteln von langgestrecktem Gut gezeigt. Hierzu wird ein Klebebandsystem aus einem ersten Klebeband 3 umfassend einen textilen Träger 31, auf dessen obere Seite eine Härtermasse 32 aufgebracht ist, und einem zweiten Klebeband 3a umfassend einen textilen Träger 31a, auf dessen untere Seite eine Reaktionsmasse 33 aufgebracht ist, verwendet.
Sowohl Härtermasse 32 als Reaktionsmasse 33 sind jeweils zu 25 % in die Träger 31, 31a eingesunken, was eine optimale Verankerung bewirkt (39, 39a).
Das erste Klebeband 3 und das zweite Klebeband 3a werden in einer Schraubenlinie um das langgestreckte Gut geführt oder umhüllen das langgestreckte Gut in axialer Richtung derart, dass die Härtermasse 32 des ersten Klebebands 3 mit der Reaktionsmasse 33 des zweiten Klebebands 3a in Kontakt tritt.
Eines der Klebebänder 3, 3a wird dabei so gewickelt, dass der Träger 31, 31a mit der nichtbeschichteten Seite in Kontakt mit dem Gut steht, so dass die Härtermasse 32 beziehungsweise die Reaktionsmasse 33 nach außen weisen. Dann erfolgt die Wicklung des anderen Klebebands 3, 3a derart, dass Härtermasse 32 und Reaktionsmasse 33 aufeinander liegen, so dass die nichtbeschichtete Seite des anderen Klebebands 3, 3a nach außen weist.

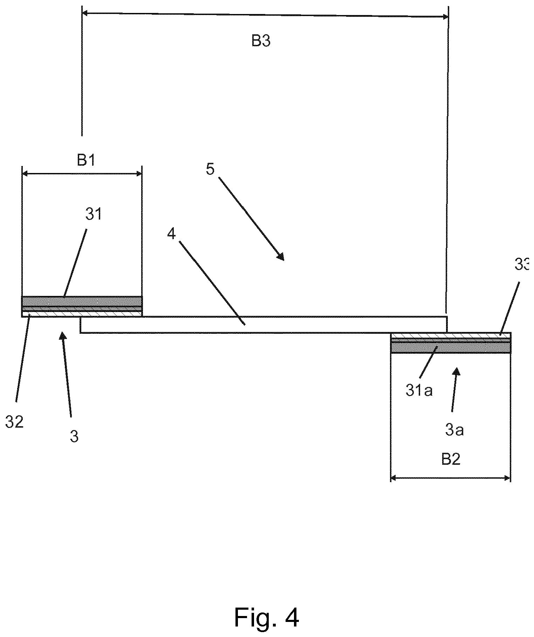

Figur 4 stellt eine weitere Variante der Erfindung dar. Diese Variante umfasst eine Ummantelung 5, die aus einer Eindeckung 4 besteht, bei der in einem Kantenbereich der Eindeckung 4 ein erstes Klebeband 3 vorhanden ist, das so auf der Eindeckung 4 verklebt ist, dass sich das erste Klebeband 3 über eine der Längskanten der Eindeckung 4 erstreckt, und zwar in einem im Vergleich zur Breite der Eindeckung 4 schmalen Kantenbereich. Das erste Klebeband 3 besteht dabei aus einem textilen Träger 31, auf den die Härtermasse 32 aufgebracht ist.

Die Ummantelung weist im Kantenbereich der Eindeckung 4, und zwar an der gegenüberliegenden Längskante, ein zweites Klebeband 3a auf, das so auf der Eindeckung 4 verklebt ist, dass sich das Klebeband 3a über die andere der beiden Längskanten der Eindeckung 4 erstreckt, und zwar ebenfalls in einem im Vergleich zur Breite der Eindeckung 4 schmalen Kantenbereich. Das zweite Klebeband 3a besteht dabei ebenfalls aus einem textilen Träger 31a, auf den die Reaktionsmasse 33 aufgebracht ist.
Die Breite (B3) der Eindeckung 4 ist um den Faktor 1,5 größer als die Summe aus den Breiten (B1, B2) der Klebebänder 3, 3a.

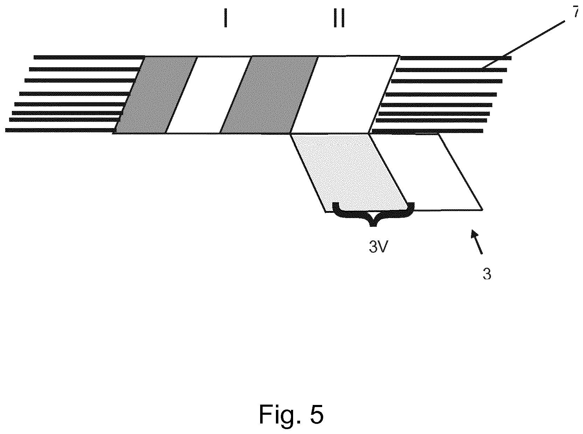

In der Figur 5 ist ein Ausschnitt eines Kabelbaums gezeigt, der sich aus einer Bündelung von einzelnen Kabeln 7 zusammensetzt und der mit dem erfindungsgemäßen, hier vereinfacht dargestellten Klebeband 3 nach der in Figur 1 beschriebenen Variante ummantelt ist. Das Klebeband 3 wird in einer spiralförmigen Bewegung um den Kabelbaum geführt.
Der gezeigte Ausschnitt des Kabelbaums zeigt zwei Wicklungen I und II des Klebebands 3. Nach links hin würden sich weitere Wicklungen erstrecken, diese sind hier nicht dargestellt.
Die Wicklung des Klebebands 3 erfolgt mit einem Versatz 3V von 50 %, was in dieser Figur durch die dunklere Farbe angedeutet ist.

## Patentansprüche

1. Verfahren zum Ummanteln von langgestrecktem Gut wie insbesondere Leitungen oder Kabelsätzen, wobei
ein Klebeband umfassend einen insbesondere textilen Träger, auf dessen obere Seite eine Härtermasse und auf dessen untere Seite eine Reaktionsmasse aufgebracht ist, in einer Schraubenlinie um das langgestreckte Gut geführt wird oder das langgestreckte Gut in axialer Richtung von dem Klebeband derart umhüllt wird, so dass die Härtermasse mit der Reaktionsmasse in Kontakt treten,
das langgestreckte Gut mitsamt dem umhüllenden Klebeband in die gewünschte Anordnung, insbesondere in den Kabelsatzplan gebracht wird,
das langgestreckte Gut in dieser Anordnung gehalten wird,
die Härtermasse mit der Reaktionsmasse reagiert, so dass eine aushärtende Masseschicht entsteht.

2. Verfahren nach Anspruch 1,
**dadurch gekennzeichnet, dass**
die Härter- und/oder die Reaktionsmasse nach dem Aufbringen auf den Träger zu mehr als 10 %, vorzugsweise zu mehr als 25 % in den Träger eingesunken sind.

3. Verfahren nach Anspruch 1,
**dadurch gekennzeichnet, dass**
die Härter- und/oder die Reaktionsmasse nach dem Aufbringen auf den Träger den Träger vollständig durchtränken.

4. Verfahren nach einem der vorstehenden Ansprüche 1 bis 3,
**dadurch gekennzeichnet, dass**
der Träger ein Flächengewicht von 30 bis 250 g/m², vorzugsweise 50 bis 200 g/m², weiter vorzugsweise 60 bis 150 g/m² aufweist.

5. Verfahren nach zumindest einem der vorherigen Ansprüche,
**dadurch gekennzeichnet, dass**
als Träger ein textiler Träger eingesetzt wird, insbesondere ein Gewebe, ein Vlies oder ein Gewirke.

6. Verfahren nach zumindest einem der vorherigen Ansprüche,
**dadurch gekennzeichnet, dass**
der textile Träger aus Polyester oder Glasfasern besteht.

7. Verfahren nach zumindest einem der vorherigen Ansprüche,
**dadurch gekennzeichnet, dass**
die Reaktionsmasse vorliegt
• als Klebemasse
• als Nassschicht in Lösung oder als Dispersion
• als in einem Lack eingebettete Masse.

8. Verfahren zum Ummanteln von langgestrecktem Gut wie insbesondere Leitungen oder Kabelsätzen, wobei
ein erstes Klebeband umfassend einen insbesondere textilen Träger, auf dessen obere Seite eine Härtermasse aufgebracht ist,
ein zweites Klebeband umfassend einen insbesondere textilen Träger, auf dessen untere Seite eine Reaktionsmasse aufgebracht ist, vorhanden sind wobei das erste und das zweite Klebeband in einer Schraubenlinie um das langgestreckte Gut geführt werden oder das langgestreckte Gut in axialer Richtung derart umhüllen, so dass die Härtermasse des ersten Klebebands mit der Reaktionsmasse des zweiten Klebebands in Kontakt tritt,
das langgestreckte Gut mitsamt den umhüllenden Klebebändern in die gewünschte Anordnung, insbesondere in den Kabelsatzplan gebracht wird,
das langgestreckte Gut in dieser Anordnung gehalten wird,
die Härtermasse mit der Reaktionsmasse reagiert, so dass eine aushärtende Masseschicht entsteht.

## Claims

1. Method for jacketing elongate material such as more particularly leads or cable looms, where
an adhesive tape comprising a carrier, more particularly a textile carrier, with a curative composition applied to its top side and a reactive composition to its bottom side, is passed in a helical line around the elongate material, or the elongate material is wrapped in the axial direction by the adhesive tape in such a way that the curative composition and the reactive composition come into contact,
the elongate material together with the adhesive tape wrapping is brought into the desired disposition, more particularly into the cable loom layout,
the elongate material is held in this disposition, the curative composition reacts with the reactive composition, to produce a curing layer of composition.

2. Method according to Claim 1,
**characterized in that**
the curative composition and/or the reactive composition, following application to the carrier, have sunken into the carrier to an extent of more than 10%, preferably more than 25%.

3. Method according to Claim 1,
**characterized in that**
the curative composition and/or the reactive composition, following application to the carrier, completely saturate the carrier.

4. Method according to any of the preceding Claims 1 to 3,
**characterized in that**
the carrier has a basis weight of 30 to 250 g/m², preferably 50 to 200 g/m², more preferably 60 to 150 g/m².

5. Method according to at least one of the preceding claims,
**characterized in that**
a textile carrier, more particularly a woven, nonwoven or knitted fabric, is used as carrier.

6. Method according to at least one of the preceding claims,
**characterized in that**
the textile carrier consists of polyester or of glass fibres.

7. Method according to at least one of the preceding claims,
**characterized in that**
the reactive composition takes the form of
• an adhesive composition
• a wet layer in solution or as a dispersion
• a composition embedded in a surface-coating material.

8. Method for jacketing elongate material such as more particularly leads or cable looms, where
a first adhesive tape comprising a carrier, more particularly a textile carrier, with a curative composition applied to its top side, and
a second adhesive tape comprising a carrier, more particularly a textile carrier, with a reactive composition applied to its bottom side, are present,
where the first and the second adhesive tapes are passed in a helical line around the elongate material, or wrap the elongate material in the axial direction in such a way that the curative composition of the first adhesive tape comes into contact with the reactive composition of the second adhesive tape,
the elongate material together with the adhesive tape wrappings is brought into the desired disposition, more particularly into the cable loom layout,
the elongate material is held in this disposition, the curative composition reacts with the reactive composition, to produce a curing layer of composition.

## Revendications

1. Procédé d'enrobage d'un produit allongé, tel que notamment des conduites ou des faisceaux de câbles, selon lequel
une bande adhésive comprenant un support notamment textile, sur le côté supérieur duquel un matériau durcisseur est appliqué et sur le côté inférieur duquel un matériau de réaction est appliqué, est menée en hélice autour du produit allongé ou le produit allongé est enveloppé dans la direction axiale par la bande adhésive, de telle sorte que le matériau durcisseur rentre en contact avec le matériau de réaction,
le produit allongé incluant la bande adhésive enveloppante est mis selon l'agencement souhaité, notamment selon le projet de faisceau de câble,
le produit allongé est maintenu selon cet agencement,
le matériau durcisseur réagit avec le matériau de réaction, de manière à former une couche de matériau durcissante.

2. Procédé selon la revendication 1, **caractérisé en ce que** le matériau durcisseur et/ou de réaction est enfoncé à hauteur de plus de 10 %, de préférence à hauteur de plus de 25 %, dans le support après l'application sur le support.

3. Procédé selon la revendication 1, **caractérisé en ce que** le matériau durcisseur et/ou de réaction imprègne entièrement le support après l'application sur le support.

4. Procédé selon l'une quelconque des revendications 1 à 3 précédentes, **caractérisé en ce que** le support présente un poids superficiel de 30 à 250 g/m², de préférence de 50 à 200 g/m², de manière davantage préférée de 60 à 150 g/m².

5. Procédé selon au moins l'une quelconque des revendications précédentes, **caractérisé en ce qu'**un support textile est utilisé en tant que support, notamment un tissu, un non-tissé ou un tricot.

6. Procédé selon au moins l'une quelconque des revendications précédentes, **caractérisé en ce que** le support textile est constitué par du polyester ou des fibres de verre.

7. Procédé selon au moins l'une quelconque des revendications précédentes, **caractérisé en ce que** le matériau de réaction se présente
- sous la forme d'un matériau adhésif,
- sous la forme d'une couche humide en solution ou sous la forme d'une dispersion,
- sous la forme d'un matériau incorporé dans un vernis.

8. Procédé d'enrobage d'un produit allongé, tel que notamment des conduites ou des faisceaux de câbles, selon lequel
une première bande adhésive comprenant un support notamment textile, sur le côté supérieur duquel un matériau durcisseur est appliqué,
une deuxième bande adhésive comprenant un support notamment textile, sur le côté inférieur duquel un matériau de réaction est appliqué, sont présentes,
la première et la deuxième bande adhésive sont menées en hélice autour du produit allongé ou le produit allongé est enveloppé dans la direction axiale, de telle sorte que le matériau durcisseur de la première bande adhésive rentre en contact avec le matériau de réaction de la deuxième bande adhésive,
le produit allongé incluant les bandes adhésives enveloppantes est mis selon l'agencement souhaité, notamment selon le projet de faisceau de câble,
le produit allongé est maintenu selon cet agencement,
le matériau durcisseur réagit avec le matériau de réaction, de manière à former une couche de matériau durcissante.
